# EUROPEAN PATENT APPLICATION

(11) **EP 4 478 804 A1**
(43) Date of publication of application: **18.12.2024**
(21) Application number: 22925922.1
(22) Date of filing: 10.02.2022
(51) Int. Cl.: H04W 72/04, H04W 16/28

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2022/005445
(87) International publication number: WO 2023/152901

(57) **Abstract**

A terminal according to an aspect of the present disclosure includes: a receiving section that receives first downlink control information scheduling a first UL channel related to at least one of a first panel and a first transmission/reception point (TRP) and second downlink control information scheduling a second UL channel related to at least one of a second panel and a second TRP; and a control section that controls transmission of the first UL channel and the second UL channel, wherein the first UL channel and the second UL channel are transmitted at least partially in the same time domain.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement, and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and the like) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems, a UE may use one of a plurality of panels (or a plurality of beams) for uplink (UL) transmission. For Rel. 18 or later versions, in order to improve the throughput/reliability in UL, it is under study that, for one or more transmission/reception points (TRPs), simultaneous UL transmission using a plurality of panels (for example, simultaneous multi-panel UL transmission (SiMPUL)) is supported.

However, studies have not sufficiently been made on how to control UL transmission using a plurality of panels (for example, simultaneous UL transmission). Unless UL transmission using a plurality of panels is appropriately performed, degradation in the system performance such as reduction in the throughput may be caused.

In view of this, the present disclosure has one object to provide a terminal, a radio communication method, and a base station that allow UL transmission to be appropriately controlled even when the UL transmission is performed using a plurality of panels.

### Solution to Problem

A terminal according to an aspect of the present disclosure includes: a receiving section that receives first downlink control information scheduling a first UL channel related to at least one of a first panel and a first transmission/reception point (TRP) and second downlink control information scheduling a second UL channel related to at least one of a second panel and a second TRP; and a control section that controls transmission of the first UL channel and the second UL channel, wherein the first UL channel and the second UL channel are transmitted at least partially in the same time domain.

### Advantageous Effects of Invention

An aspect of the present disclosure allows UL transmission to be appropriately controlled even when the UL transmission is performed using a plurality of panels.

### Brief Description of Drawings

[FIG. 1] FIG. 1 is a diagram to show an example of association between precoder types and TPMI indices.
[FIG. 2] FIGS. 2A and 2B are each a diagram to show an example of UL transmission with a single panel.
[FIG. 3] FIGS. 3A to 3C are diagrams to show examples of schemes 1 to 3 for simultaneous UL transmission using multi-panel.
[FIG. 4] FIGS. 4A and 4B are each a diagram to show an example of a PUSCH transmission according to a first embodiment.
[FIG. 5] FIGS. 5A and 5B are each a diagram to show an example of a configuration of a higher layer parameter according to a second embodiment.
[FIG. 6] FIGS. 6A and 6B are each a diagram to show an example of a configuration of a higher layer parameter according to a third embodiment.
[FIG. 7] FIGS. 7A and 7B are diagrams to show examples of UE operation #1/UE operation #2.
[FIG. 8] FIGS. 8A and 8B are each a diagram to show an example of a plurality of PUSCH transmissions according to a fourth embodiment.
[FIG. 9] FIG. 9 is a diagram to show another example of the plurality of PUSCH transmissions according to the fourth embodiment.
[FIG. 10] FIG. 10 is a diagram to show an example of a schematic structure of a radio communication system according to one embodiment.
[FIG. 11] FIG. 11 is a diagram to show an example of a structure of a base station according to one embodiment.
[FIG. 12] FIG. 12 is a diagram to show an example of a structure of a user terminal according to one embodiment.
[FIG. 13] FIG. 13 is a diagram to show an example of a hardware structure of the base station and the user terminal according to one embodiment.
[FIG. 14] FIG. 14 is a diagram to show an example of a vehicle according to one embodiment.

### Description of Embodiments

### (PUSCH Precoder)

For NR, it is under study that a UE supports at least one of codebook (CB) based transmission and non-codebook (NCB) based transmission.

For example, it is under study that a UE judges a precoder (precoding matrix) for at least one of CB based and NCB based uplink shared channel (Physical Uplink Shared Channel (PUSCH)) transmissions by using at least a reference signal for measurement (Sounding Reference Signal (SRS)) resource indicator (SRI).

In a case of the CB based transmission, the UE may determine a precoder for a PUSCH transmission, based on an SRI, a transmitted rank indicator (TRI), a transmitted precoding matrix indicator (TPMI), and the like. In a case of the NCB based transmission, the UE may determine a precoder for a PUSCH transmission, based on an SRI.

The UE may be notified of such an SRI, TRI, TPMI, or the like by using downlink control information (DCI). The SRI may be specified by an SRS Resource Indicator field (SRI field) of the DCI or may be specified by a parameter "srs-ResourceIndicator" included in an RRC information element "ConfiguredGrantConfig" for a configured grant PUSCH. The TRI and the TPMI may be specified by a "Precoding information and number of layers" field of the DCI.

The UE may report UE capability information related to a precoder type and be configured, by a base station, with the precoder type based on the UE capability information by higher layer signaling. The UE capability information may be precoder type information to be used by the UE in PUSCH transmission (which may be indicated by an RRC parameter "pusch-TransCoherence") .

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. For example, the broadcast information may be master information blocks (MIBs), system information blocks (SIBs), and the like.

The UE may determine a precoder to be used for the PUSCH transmission, based on precoder type information (which may be indicated by an RRC parameter "codebookSubset") included in PUSCH configuration information notified by higher layer signaling ("PUSCH-Config" information element of RRC signaling). The UE may be configured with a subset of a PMI specified by a TPMI, by codebookSubset.

Note that the precoder type may be specified by any of or a combination of at least two of full coherent (fully coherent, coherent), partial coherent, and non-coherent (non coherent) (which may be indicated, for example, by a parameter such as "fullyAndPartialAndNonCoherent" or "partialAndNonCoherent."

Full coherent may mean that all the antenna ports to be used for transmission are synchronized (which may be expressed as being able to be matched in terms of phase, having the same precoder to be applied, and the like). Partial coherent may mean that some ports of the antenna ports to be used for transmission are synchronized but the ports and the other ports are not synchronized. Non-coherent may mean that the antenna ports to be used for transmission are not synchronized.

Note that a UE that supports the precoder type, full coherent, may be assumed to support the precoder types, partial coherent and non-coherent. A UE that supports the precoder type, partial coherent, may be assumed to support the precoder type, non-coherent.

The precoder type may be interpreted as coherency, PUSCH transmission coherence, a coherent type, a coherence type, a codebook type, a codebook subset, a codebook subset type, and the like.

The UE may determine a precoding matrix corresponding to the TPMI index obtained from DCI for scheduling UL transmission (for example, DCI format 0_1, this similarly applies below), from a plurality of precoders (which may be referred to as a precoding matrix, a codebook, and the like) for CB based transmission.

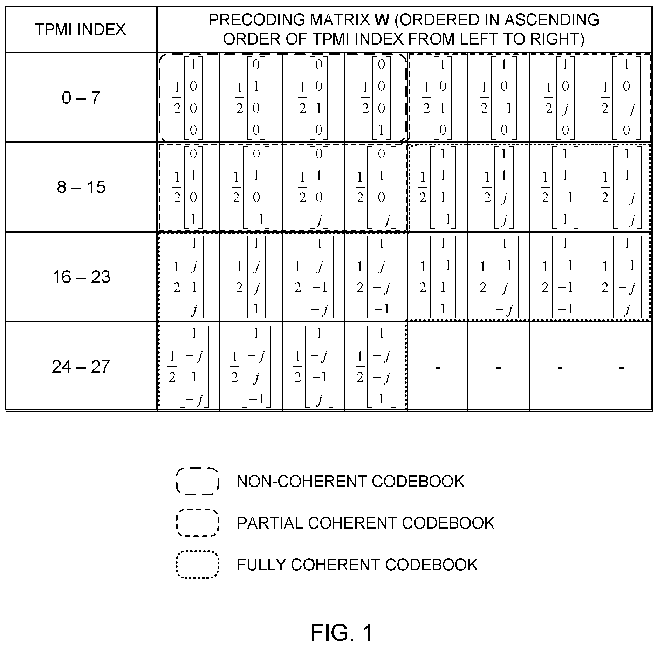

FIG. 1 is a diagram to show an example of association between precoder types and TPMI indices. FIG. 1 corresponds to a table of precoding matrix W for single-layer (rank 1) transmission using four antenna ports with DFT-s-OFDM (Discrete Fourier Transform spread OFDM, transform precoding is enabled).

In FIG. 1, when a precoder type (codebookSubset) is "fullyAndPartialAndNonCoherent," a UE is notified of a TPMI of any one of 0 to 27, for the single-layer transmission. When a precoder type is "partialAndNonCoherent", the UE is configured with a TPMI of any one of 0 to 11, for the single-layer transmission. When a precoder type is "nonCoherent", the UE is configured with a TPMI of any one of 0 to 3, for the single-layer transmission.

Note that, as shown in FIG. 1, a precoding matrix with only one of the components in each column being other than 0 may be referred to as a non-coherent codebook. A precoding matrix with only a certain number of components of (not all of) the components in each column being other than 0 may be referred to as a partial coherent codebook. A precoding matrix with none of the components in each column being 0 may be referred to as a fully coherent codebook.

Each of the non-coherent codebook and partial coherent codebook may be referred to as an antenna selection precoder. The fully coherent codebook may be referred to as a non-antenna selection precoder.

Note that, in the present disclosure, the partial coherent codebook may correspond to codebooks (i.e., codebooks of TPMI = 4 to 11 in a case of single-layer transmission with four antenna ports) obtained by eliminating codebooks corresponding to TPMIs specified for a UE configured with a non-coherent codebook subset (for example, an RRC parameter "codebookSubset" = "nonCoherent") from codebooks (precoding matrices) corresponding to TPMIs specified by DCI for codebook based transmission for a UE configured with a partial coherent codebook subset (for example, an RRC parameter "codebookSubset" = "partialAndNonCoherent") .

Note that, in the present disclosure, the fully coherent codebook may correspond to codebooks (i.e., codebooks of TPMI = 12 to 27 in the case of single-layer transmission with four antenna ports) obtained by eliminating codebooks corresponding to TPMIs specified for a UE configured with the partial coherent codebook subset (for example, the RRC parameter "codebookSubset" = "partialAndNonCoherent") from codebooks (precoding matrices) corresponding to TPMIs specified by DCI for codebook based transmission for a UE configured with a fully coherent codebook subset (for example, an RRC parameter "codebookSubset" = "fullyAndPartialAndNonCoherent") .

### (Spatial Relation for SRS and PUSCH)

The UE may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example an RRC control element "SRS-Resource").

One SRS resource set may be related to a certain number of SRS resources (may group the certain number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

Here, the SRS resource type may indicate any one of a periodic SRS (P-SRS), a semi-persistent SRS (SP-SRS), and an aperiodic SRS (A-SRS, AP-SRS). Note that the UE may transmit a P-SRS and an SP-SRS periodically (or periodically after activation) and transmit an A-SRS on the basis of an SRS request of DCI.

The usage (RRC parameter "usage," L1 (Layer-1) parameter "SRS-SetUse") may be, for example, beam management (beamManagement), codebook based transmission (codebook (CB)), non-codebook based transmission (nonCodebook (NCB)), antenna switching (antennaSwitching), or the like. An SRS with codebook based transmission or non-codebook based transmission usage may be used to determine a precoder for codebook based or non-codebook based PUSCH transmission based on an SRI.

For example, in a case of codebook based transmission, the UE may determine a precoder for the PUSCH transmission on the basis of an SRI, a transmitted rank indicator (TRI), and a transmitted precoding matrix indicator (TPMI). In a case of non-codebook based transmission, the UE may determine a precoder for the PUSCH transmission on the basis of an SRI.

The SRS resource information may include an SRS resource ID (SRS-ResourceId), the number of SRS ports, an SRS port number, a transmission Comb, SRS resource mapping (for example, time and/or frequency resource position, resource offset, resource periodicity, the number of times of repetition, the number of SRS symbols, SRS bandwidth, and the like), hopping related information, an SRS resource type, a sequence ID, spatial relation information for an SRS, and the like.

The spatial relation information for an SRS (for example, an RRC information element "spatialRelationInfo") may indicate spatial relation information between a certain reference signal and the SRS. Such a certain reference signal may be at least one of a synchronization signal/broadcast channel (Synchronization Signal/Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information for the SRS may include, as an index for the certain reference signal described above, at least one of an SSB index, a CSI-RS resource ID, and an SRS resource ID.

Note that, in the present disclosure, an SSB index, an SSB resource ID, and an SSBRI (SSB Resource Indicator) may be interchangeably interpreted. A CSI-RS index, a CSI-RS resource ID, and a CRI (CSI-RS Resource Indicator) may be interchangeably interpreted. An SRS index, an SRS resource ID, and an SRI may be interchangeably interpreted.

The spatial relation information for the SRS may include a serving cell index, a BWP index (BWP ID), and the like corresponding to the certain reference signal described above.

In NR, transmission of an uplink signal may be controlled based on presence or absence of beam correspondence (BC). The BC may be, for example, a capability for a certain node (for example, base station or UE) to determine a beam (transmit beam, Tx beam) to be used for transmission of a signal on the basis of a beam (receive beam, Rx beam) to be used for reception of a signal.

Note that the BC may be referred to as transmit/receive beam correspondence (Tx/Rx beam correspondence), beam reciprocity, beam calibration, calibrated/non-calibrated, reciprocity calibrated/non-calibrated, degree of correspondence, degree of matching, or the like.

For example, without such BC, the UE may transmit an uplink signal (for example, PUSCH, PUCCH, SRS, or the like) by using a beam (spatial domain transmission filter) the same as that of an SRS (or SRS resource) indicated from a base station on the basis of a result of measurement of one or more SRSs (SRS resources).

On the other hand, with the BC, the UE may transmit an uplink signal (for example, PUSCH, PUCCH, SRS, or the like) by using a beam (spatial domain transmission filter) the same as or corresponding to a beam (spatial domain reception filter) to be used for reception of a certain SSB or CSI-RS (or CSI-RS resource).

Regarding a certain SRS resource, when spatial relation information related to an SSB or CSI-RS and an SRS is configured (for example, with the BC), the UE may transmit the SRS resource by using a spatial domain filter (spatial domain transmission filter) the same as a spatial domain filter (spatial domain reception filter) for reception of the SSB or CSI-RS. In this case, the UE may assume that a UE receive beam for the SSB or CSI-RS is the same as a UE transmit beam for the SRS.

Regarding a certain SRS (target SRS) resource, when spatial relation information related to another SRS (reference SRS) and the SRS (target SRS) is configured (for example, without the BC), the UE may transmit the target SRS resource by using a spatial domain filter (spatial domain transmission filter) the same as a spatial domain filter (spatial domain transmission filter) for transmission of the reference SRS. In other words, in this case, the UE may assume that a UE transmit beam for the reference SRS is the same as a UE transmit beam for the target SRS.

Based on a value of a certain field (for example, an SRS resource indicator (SRI) field) in DCI (for example, DCI format 0_1), the UE may determine a spatial relation of a PUSCH scheduled by the DCI. Specifically, the UE may use, for the PUSCH transmission, spatial relation information (for example, an RRC information element "spatialRelationInfo") of an SRS resource determined based on the value (for example, SRI) of the certain field.

For a PUSCH, when codebook based transmission is used, two SRS resources may be configured for the UE by RRC and one of the two SRS resources may be indicated for the UE by DCI (a certain field of one bit). For a PUSCH, when non-codebook based transmission is used, four SRS resources may be configured for the UE by RRC and one of the four SRS resources may be indicated for the UE by DCI (a certain field of two bits). In order to use a spatial relation other than the two or four spatial relations configured by RRC, RRC reconfiguration is required.

Note that, for a spatial relation of an SRS resource to be used for a PUSCH, a DL-RS may be configured. For example, with respect to an SP-SRS, a spatial relation of a plurality of (for example, up to 16) SRS resources may be configured for the UE by RRC, and one of the plurality of SRS resources may be indicated for the UE by a MAC CE.

### (TPMI and Transmitted Rank)

For Rel. 16, it is under study that a transmitted precoding matrix indicator (TPMI) and a transmitted rank for codebook based PUSCH transmission are indicated by a specific field (for example, "Precoding information and number of layers" field) included in downlink control information (for example, DCI format 0_1). Note that, in the present disclosure, "rank" may be interchangeably interpreted as "layer".

A precoder to be used by the UE for codebook based PUSCH transmission may be selected from an uplink codebook having the number of antenna ports equal to a value configured with a higher layer parameter (for example, nrofSRS-Ports) configured for an SRS resource.

The size (the number of bits) of the specific field is variable depending on the number of antenna ports for a PUSCH (for example, the number of ports indicated by nrofSRS-Ports described above) and some higher layer parameters.

When a higher layer parameter (for example, txConfig) configured for the UE is configured equal to "nonCodebook", the specific field may have zero bits.

For one antenna port, when a higher layer parameter (for example, txConfig) configured for the UE is configured equal to "codebook", the specific field may have zero bits.

For four antenna ports, when a higher layer parameter (for example, txConfig) configured for the UE is configured equal to "codebook", the specific field may have a bit length of two to six bits, based on at least one of another higher layer parameter configured for the UE and presence or absence (valid or invalid) of a transform precoder.

For two antenna ports, when a higher layer parameter (for example, txConfig) configured for the UE is configured equal to "codebook", the specific field may have a bit length of one to four bits, based on at least one of another higher layer parameter configured for the UE and presence or absence (valid or invalid) of a transform precoder.

Such another higher layer parameter may be at least one of a parameter for specifying a full power transmission mode for UL (for example, ul-FullPowerTransmission, ul-FullPowerTransmission-r16), a parameter indicating a maximum value of a transmitted rank for UL (for example, maxRank), a parameter indicating a subset of a certain precoding matrix indicator (PMI) (for example, codebookSubset), and a parameter for specifying a transform precoder (for example, transformPrecoder).

### (Single-panel Transmission)

For a single-panel UL transmission scheme or single-panel UL transmission scheme candidate, at least one of the following transmission schemes A and B (single-panel UL transmission schemes A and B) may be applied. Note that, in the present disclosure, a panel/UE panel may be interpreted as a UE capability value set reported per UE capability.

### {Transmission Scheme A: Single-panel Single-TRP UL Transmission}

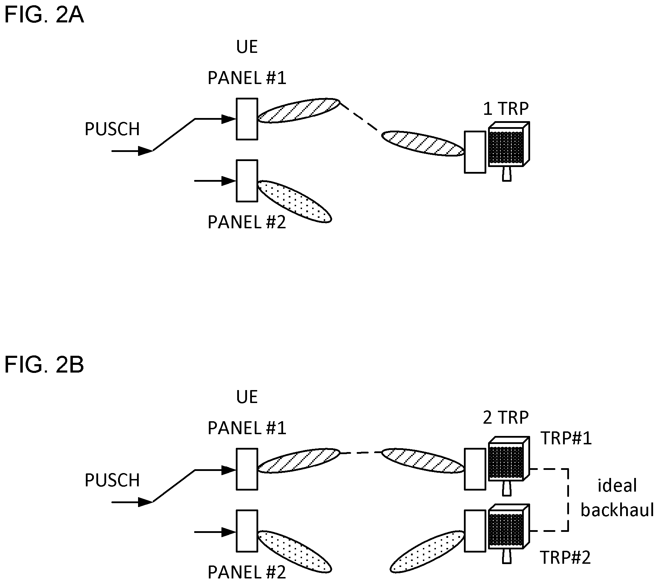

In Rel. 15 and Rel. 16, for a UE, a transmission scheme is used that, at one time point, UL is transmitted for one TRP from only one beam and panel (FIG. 2A).

### {Transmission Scheme B: Single-panel Multi-TRP UL Transmission}

For Rel. 17, it is under study that, at one time point, UL transmission from only one beam and panel is performed and the repetition transmission is performed for a plurality of TRPs (FIG. 2B). In an example of FIG. 2B, a UE transmits a PUSCH from panel #1 to TRP #1 and then (switches the beam and panel and) transmits a PUSCH from panel #2 to TRP #2. The two TRPs are connected to each other through ideal backhaul.

### (Multi-panel Transmission)

For Rel. 18 or later versions, in order to improve the throughput/reliability in UL, it is under study that simultaneous UL transmission using a plurality of panels is supported for one or more TRPs. For a certain UL channel (for example, PUSCH/PUCCH) or the like, a multi-panel UL transmission scheme is under study.

As multi-panel UL transmission, for example, up to X (for example, X = 2) and up to Y (for example, Y = 2) panels may be supported. In the multi-panel UL transmission, when UL precoding indication for a PUSCH is supported, a codebook of an existing system (for example, Rel. 16 or earlier versions) may be supported for multi-panel simultaneous transmission. Taking account of single-DCI and multi-DCI based multi-TRP operations, the number of layers may be up to x (for example, x = 4) for all the panels and the number of codewords (CWs) may be up to y (for example, y = 2) for all the panels.

For a multi-panel UL transmission scheme or multi-panel UL transmission scheme candidate, at least one of the following schemes 1 to 3 (multi-panel UL transmission schemes 1 to 3) is under study. Only one of the transmission schemes 1 to 3 may be supported. A plurality of schemes including at least one of the transmission schemes 1 to 3 may be supported and one of the plurality of transmission schemes may be configured for a UE.

### {Transmission Scheme 1: Coherent Multi-panel UL Transmission}

A plurality of panels may be synchronized with each other. All layers are mapped to every panel. A plurality of analog beams are indicated. An SRS resource indicator (SRI) field may be extended. With this scheme, up to four layers may be used for UL.

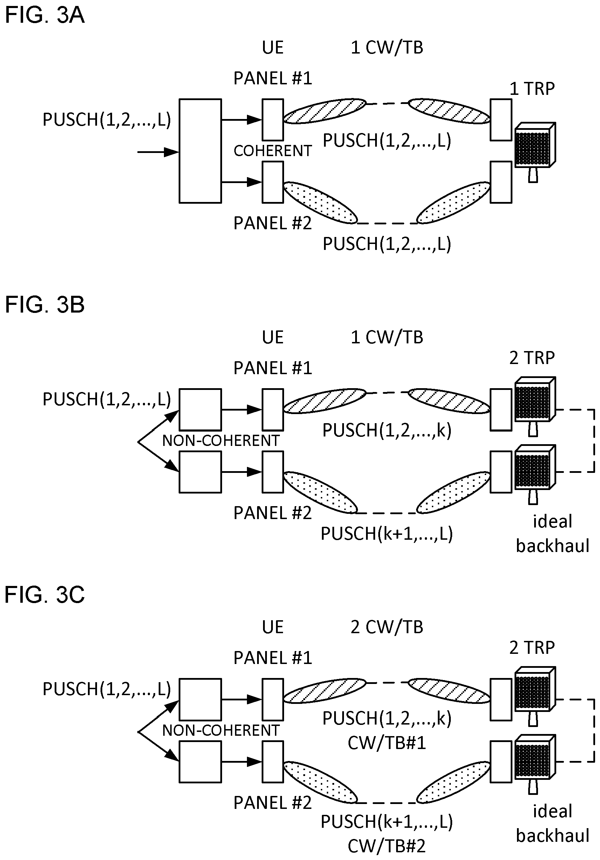

In an example of FIG. 3A, a UE maps one codeword (CW) or one transport block (TB) to L layers (PUSCHs (1, 2, ..., L)) and transmits the L layers from each of two panels. Panel #1 and panel #2 are in coherent with each other. Transmission scheme 1 allows gain due to diversity to be obtained. The total number of layers for the two panels is 2L. When the maximum value of the total number of layers is four, the maximum value of the number of layers in one panel is two.

### {Transmission Scheme 2: Non-coherent Multi-panel UL Transmission of One Codeword (CW) or Transport Block (TB)}

A plurality of panels may not need to be synchronized with each other. Different layers are mapped to different panels and to one CW or TB for PUSCHs from the plurality of panels. Layers corresponding to one CW or TB may be mapped to a plurality of panels. With this transmission scheme, up to four layers or up to eight layers may be used for UL. When up to eight layers are supported, this transmission scheme may support one CW or TB using up to eight layers.

In an example of FIG. 3B, a UE maps one CW or one TB to k layers (PUSCHs (1, 2, ..., k)) and L - k layers (PUSCHs (k + 1, k + 2, ..., L)), and transmits the k layers from panel #1 and transmits L - k layers from panel #2. Transmission scheme 2 allows gain due to multiplexing and diversity to be obtained. The total number of layers for the two panels is L.

### {Transmission Scheme 3: Non-coherent Multi-panel UL Transmission of two CWs or TBs}

A plurality of panels may not need to be synchronized with each other. Different layers are mapped to different panels and to two CWs or TBs for PUSCHs from the plurality of panels. Layers corresponding to one CW or TB may be mapped to one panel. Layers corresponding to a plurality of CWs or TBs may be mapped to a plurality of panels. With this transmission scheme, up to four layers or up to eight layers may be used for UL. When up to eight layers are supported, this transmission scheme may support up to four layers per CW or TB.

In an example of FIG. 3C, a UE maps CW #1 or TB #1, out of two CWs or two TBs, to k layers (PUSCHs (1, 2, ..., k)) and maps CW #2 or TB #2 to L - k layers (PUSCHs (k + 1, k + 2, ..., L)), and transmits the k layers from panel #1 and transmits L - k layers from panel #2. Transmission scheme 3 allows gain due to multiplexing and diversity to be obtained. The total number of layers for the two panels is L.

In each transmission scheme described above, a base station may configure or indicate panel-specific transmission for UL transmission, by using a UL TCI or panel ID. The UL TCI (UL TCI state) may be based on signaling similar to DL beam indication supported in Rel. 15. The panel ID may be implicitly or explicitly applied to transmission of at least one of a target RS resource or target RS resource set, a PUCCH, an SRS, and a PRACH. When the panel ID is explicitly notified, the panel ID may be configured in at least one of a target RS, a target channel, and a reference RS (for example, DL RS resource configuration or spatial relation information).

For one or more of the transmission schemes/modes described above, multi-panel UL transmission (for example, simultaneous multi-panel UL transmission (SiMPUL)) with respect to scheduling of a PUSCH based on one piece of DCI (single DCI)/scheduling of a PUSCH based on a plurality of pieces of DCI (multi-DCI) is under study.

Meanwhile, when at least one of single-DCI based simultaneous multi-panel UL transmission (case #1) and multi-DCI based simultaneous multi-panel UL transmission (case #2) is supported, a problem is how to control the UL transmission.

For example, in multi-DCI based simultaneous multi-panel UL transmission, a problem is how to control a time/frequency resource for a PUSCH per panel (or corresponding to each panel).

Alternatively, in each case, a problem is how to control codebook configuration (for example, codebook subset configuration) per CW/panel/TRP/PUSCH/TB. Alternatively, in each case, a problem is how to control UL transmit power configuration (for example, UL full power configuration) per CW/panel/TRP/PUSCH/TB.

Alternatively, in each case, a problem is how to control a constriction for a UL rank (for example, UL rank constriction) per CW/panel/TRP/PUSCH/TB.

Alternatively, in multi-DCI based simultaneous multi-panel UL transmission, a problem is how to control: transmission of PUSCHs corresponding to panels/scheduling order/whether to support overlap in a time domain or the like.

In view of this, the inventors of the present invention studied on UL transmission control that solves at least one of the problems described above, and came up with the idea of the present embodiment.

Embodiments according to the present disclosure will be described in detail with reference to the drawings as follows. The radio communication methods according to respective embodiments may each be employed individually, or may be employed in combination.

Note that in the present disclosure, "A/B" may mean "at least one of A and B." In the present disclosure, "A/B/C" may mean "at least one of A, B, and C."

In the present disclosure, a cell, a serving cell, a CC, a carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, "support," "control," "controllable," "operate," and "operable" may be interchangeably interpreted.

In the present disclosure, configuration (configure), activation (activate), update, indication (indicate), enabling (enable), specification (specify), and selection (select) may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), and an RRC message may be interchangeably interpreted.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, a MAC CE and an activation/deactivation command may be interchangeably interpreted.

In the present disclosure, a panel, a beam, a spatial domain filter, spatial setting, a TCI state, a UL TCI state, a unified TCI state, a unified beam, a common TCI state, a common beam, TCI assumption, QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D in a TCI state/QCL assumption, an RS of QCL type A in a TCI state/QCL assumption, a spatial relation, a spatial domain transmission filter, a UE spatial domain transmission filter, a UE transmit beam, a UL beam, a UL transmit beam, UL precoding, a UL precoder, and a PL-RS may be interchangeably interpreted. In the present disclosure, a QCL type X-RS, a DL-RS associated with QCL type X, a DL-RS having QCL type X, a DL-RS source, an SSB, a CSI-RS, and an SRS may be interchangeably interpreted.

In the present disclosure, a panel, an Uplink (UL) transmission entity, a TRP, a spatial relation, a control resource set (CORESET), a PDSCH, a codeword, a base station, an antenna port for a certain signal (for example, a demodulation reference signal (DMRS) port), an antenna port group for a certain signal (for example, a DMRS port group), a group for multiplexing (for example, a code division multiplexing (CDM) group, a reference signal group, or a CORESET group), a CORESET pool, a CORESET subset, a CW, a redundancy version (RV), and a layer (MIMO layer, transmission layer, spatial layer) may be interchangeably interpreted. A panel Identifier (ID) and a panel may be interchangeably interpreted. In the present disclosure, a TRP ID, a TRP related ID, a CORESET pool index, a position of one TCI state of two TCI states corresponding to one codepoint of a field in DCI (ordinal number, first TCI state or second TCI state), and a TRP may be interchangeably interpreted.

In the present disclosure, a panel, a UE panel, an RS port group, a DMRS port group, an SRS port group, an RS resource group, a DMRS resource group, an SRS resource group, a beam group, a TCI state group, a spatial relation group, an SRS resource indicator (SRI) group, an antenna port group, an antenna group, and a CORESET group may be interchangeably interpreted.

A panel may be associated with at least one of a panel ID, a UL TCI state, a UL beam, an L beam, a DL RS resource, and spatial relation information.

In the present disclosure, multi-TRP, a multi-TRP system, multi-TRP transmission, multi-PDSCH, a channel using multi-TRP, a channel using a plurality of TCI states/spatial relations, multi-TRP being enabled by RRC/DCI, a plurality of TCI states/spatial relations being enabled by RRC/DCI, and at least one of multi-TRP based on single DCI and multi-TRP based on multi-DCI may be interchangeably interpreted. In the present disclosure, multi-TRP based on multi-DCI and one CORESET pool index (CORESETPoolIndex) value being configured for a CORESET may be interchangeably interpreted. In the present disclosure, multi-TRP based on single DCI and at least one codepoint in a TCI field being mapped to two TCI states may be interchangeably interpreted.

In the present disclosure, a single TRP, single DCI, a single PDCCH, multi-TRP based on single DCI, a single-TRP system, single-TRP transmission, a single PDSCH, a channel using a single TRP, a channel using one TCI state/spatial relation, multi-TRP being not enabled by RRC/DCI, a plurality of TCI states/spatial relations being not enabled by RRC/DCI, one CORESET pool index (CORESETPoolIndex) value being not configured for any CORESET and any codepoint of a TCI field being not mapped to two TCI states, and activation of two TCI states in at least one TCI codepoint may be interchangeably interpreted.

In the present disclosure, "switch," "determine," and "select" may be interchangeably interpreted.

### (Radio Communication Method)

Simultaneous UL transmission with multi-beam/multi-panel (hereinafter, also simply referred to as multi-panel) may be configured for a UE. Such configuration may be made using higher layer signaling (for example, RRC signaling/MAC CE)/physical layer signaling (for example, DCI).

Such configuration may be configuration related to simultaneous UL transmission with multi-panel or may be configuration related to simultaneous UL transmission with multi-panel over a plurality of (plurality of types of) UL channels/signals.

The UE may report, to a network (NW, for example, base station), capability information related to simultaneous UL transmission with multi-panel.

Such UE capability information may be capability information on simultaneous UL transmission with multi-panel or may be capability information on simultaneous UL transmission with multi-panel over a plurality of (plurality of types of) UL channels/signals.

The UE may report, to the NW, the capability information related to simultaneous UL transmission with multi-panel, and simultaneous UL transmission with multi-panel may be configured for the UE.

The NW may transmit, to the UE, information related to collision handling for the UL channels/signals described above. Such information may be transmitted using higher layer signaling/physical layer signaling.

In the following, although a case is mainly described that the number of panels is two, the number of panels may be two or more. Each embodiment of the present disclosure may be applicable as appropriate to transmission with three or more panels.

In the present disclosure, the base station may receive at least one of a plurality of UL channels/signals transmitted simultaneously by the UE. Note that simultaneous transmission of a plurality of UL channels/signals may mean support/allowance of overlap of at least a part of each UL channel/signal in a time domain.

### <First Embodiment>

A first embodiment describes resource allocation in multi-DCI based simultaneous multi-panel UL transmission (for example, SiMPUL). In the following, although description is given taking PUSCH transmission as UL transmission as an example, the description may be applied to another UL channel/UL signal.

Whether to apply multi-DCI based simultaneous multi-panel UL transmission (for example, SiMPUL) may be configured for a UE by a network (for example, base station). For example, the base station configures, for the UE, multi-DCI based simultaneous multi-panel UL transmission by using a higher layer parameter (for example, RRC parameter).

In this case, the UE may assume that up to two PUSCHs associated with a plurality of (for example, two) TRPs/panels are to be scheduled. The PUSCHs may correspond to up to X (for example, X = 1) CW(s). The respective PUSCHs may be scheduled (for example, transmission parameters may be indicated) by multi-DCI. For example, when two PUSCHs (for example, PUSCH #1 and PUSCH #2) are to be transmitted using multi-panel, PUSCH #1 may be scheduled by DCI #1 and PUSCH #2 may be scheduled by DCI #2.

Association between TRPs/panels and PUSCHs may be determined based on at least one of association configured between the TRPs/panels and the PUSCHs, association configured between the TRPs/panels and TCIs of the PUSCHs, association configured between the TRPs/panels and spatial relations of the PUSCHs, association configured between the TRPs/panels and pieces of DCI used for scheduling of the PUSCHs, and association configured between the TRPs/panels and CORESETs for scheduling of the PUSCHs.

A TRP/panel ID may be indicated by at least one of a CORESET pool index, a panel ID, an antenna group ID for a UE, an RS group ID, and a UE capability set ID.

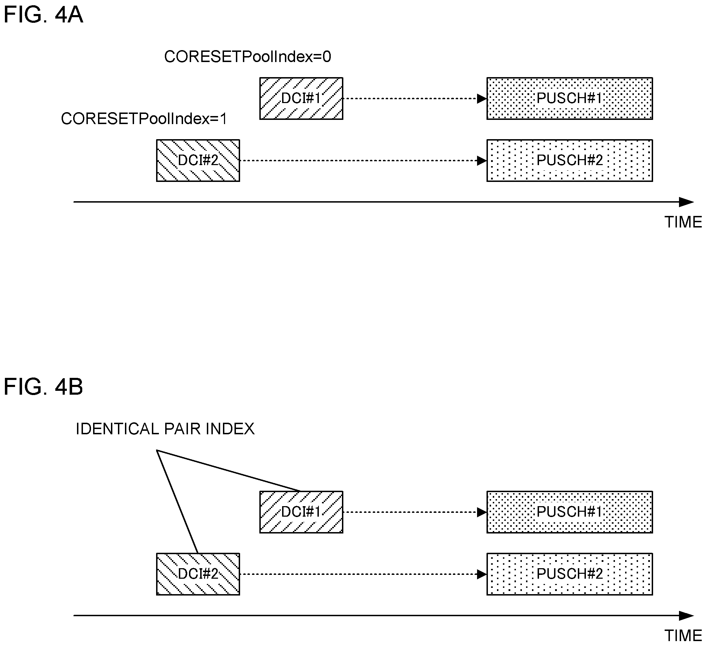

A plurality of (for example, two) PUSCHs (for example, PUSCH #1 and PUSCH #2) to be transmitted using multi-panel may be transmitted overlapping with each other in the time domain (or time-domain). In this case, PUSCH #1 and PUSCH #2 may be scheduled/transmitted/mapped overlapping with each other entirely in the time domain (see FIG. 4A). Alternatively, PUSCH #1 and PUSCH #2 may be scheduled/transmitted/mapped overlapping with each other at least partially in the time domain (see FIG. 4B).

In FIG. 4A, a case is shown where DCI #1 scheduling PUSCH #1 and DCI #2 scheduling PUSCH #2 correspond to different CORESET pool indices. In FIG. 4B, a case is shown where DCI #1 scheduling PUSCH #1 and DCI #2 scheduling PUSCH #2 have the same pair index. The pair index may be defined/configured in multi-DCI basis. For example, an identical pair index may be defined/configured for a combination of respective pieces of DCI corresponding to multi-panel/TRP (for example, a combination of DCI #1 corresponding to panel #1/TRP #1 and DCI #2 corresponding to panel #2/TRP #2). Note that relation between DCI #1 and DCI #2 is not limited to this.

As frequency domain (or frequency-domain) allocation of a plurality of PUSCHs (for example, PUSCH #1 and PUSCH #2) overlapping with each other in the time domain, at least one of Option 1-1 to Option 1-3 below may be applied.

### {Option 1-1}

Non overlap (non-overlapping), partial overlap (partial-overlapping), and full overlap (full-overlapping) are supported.

### {Option 1-2}

Only a part of cases of non overlap (non-overlapping), partial overlap (partial-overlapping), and full overlap (full-overlapping) is supported. A case to be supported may be defined in a specification or may be configured, for a UE, by a base station by using a higher layer parameter or the like.

### {Option 1-3}

In Option 1-1 or Option 1-2, a case where there is no overlap in the frequency domain (non overlap (non-overlapping)) or a configuration where a gap between two frequency domain resource allocations (for example, gap/offset between PUSCH #1 and PUSCH #2) meets a certain condition/certain range may be used. For example, a gap between two frequency domain resource allocations may be restricted to be smaller than X subcarriers/X resource blocks (RBs)/X physical resource blocks (PRBs). X may be defined in a specification (for example, defined as a fixed value) or may be configured, for a UE, by a base station by using a higher layer parameter or the like.

A UE capability may be introduced/supported for each option.

In Option 1-1 to Option 1-3, a certain condition may be applied to a plurality of (for example, two) PUSCHs (for example, PUSCH #1 and PUSCH #2). The certain condition may be a configuration of demodulation reference signal (for example, DMRS).

For example, for a plurality of (for example, two) PUSCHs (for example, PUSCH #1 and PUSCH #2), at least one of configurations of DMRS may be configured the same (or configured commonly). The configurations of DMRS may include at least one of a DMRS configuration type, a mapping time, a mapping type, the number of additional DMRSs, and a single-symbol DMRS or double-symbol DMRS.

Alternatively, for a plurality of (for example, two) PUSCHs (for example, PUSCH #1 and PUSCH #2), a symbol index of DMRS may be configured the same (or configured commonly).

Alternatively, for a plurality of (for example, two) PUSCHs (for example, PUSCH #1 and PUSCH #2), different CDM groups of DMRS may be configured or a CDM group may be configured the same (or configured commonly).

### <Second Embodiment>

A second embodiment describes control of codebook configuration/UL power in simultaneous multi-panel UL transmission (for example, SiMPUL). In the following, although description is given taking PUSCH transmission as UL transmission as an example, the description may be applied to another UL channel/UL signal.

### <<Single-DCI Basis>>

In a case where single-DCI based simultaneous multi-panel UL transmission (for example, SiMPUL) is configured, for codebook configuration (for example, codebook subset configuration)/UL full power transmission (for example, ul-FullPowerTransmission), at least one of Option 2A-1 and Option 2A-2 below may be applied.

Whether to apply single-DCI based simultaneous multi-panel UL transmission (for example, SiMPUL) may be configured for a UE by a network (for example, base station). For example, the base station configures, for the UE, single-DCI based simultaneous multi-panel UL transmission by using a higher layer parameter (for example, RRC parameter). The UE may judge "single-DCI based" when no CORESET pool index is configured (or when only one value is configured as a CORESET pool index).

### {Option 2A-1}

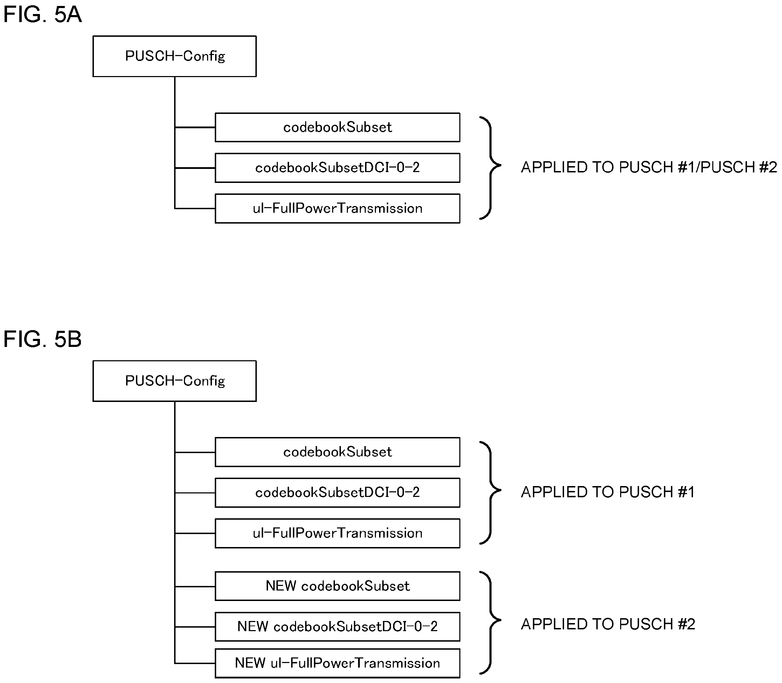

For single-DCI based simultaneous multi-panel UL transmission (for example, a plurality of PUSCHs), the codebook configuration (for example, codebook subset configuration)/UL full power transmission (for example, ul-FullPowerTransmission) may be configured similarly to an existing system (for example, Rel. 16 or earlier versions). For example, for single-DCI based simultaneous multi-panel UL transmission (for example, a plurality of PUSCHs), the codebook configuration (for example, codebook subset configuration)/UL full power transmission (for example, ul-FullPowerTransmission) may be configured in common by higher layer signaling (see FIG. 5A).

The UE may apply a higher layer parameter related to the codebook configuration in common to a plurality of PUSCHs, regardless of a TRP/panel to which each PUSCH is related to. For example, by higher layer signaling, a codebook subset configuration (for example, codebookSubset) for a certain DCI format (for example, DCI format 0_1/0_2) may be applied in common to the plurality of PUSCHs. More specifically, with a codebook subset (for example, codebookSubset) included in a PUSCH configuration (for example, PUSCH-Config), fully coherent, partial coherent, or non-coherent ({fullyAndPartialAndNonCoherent, partialAndNonCoherent, nonCoherent}) may be configured for the plurality of PUSCHs.

The UE may apply a higher layer parameter related to the UL full power transmission in common to a plurality of PUSCHs, regardless of a TRP/panel to which each PUSCH is related to. For example, by higher layer signaling, a full power transmission mode (for example, ul-FullPowerTransmission) may be applied in common to the plurality of PUSCHs. More specifically, with a full power transmission mode (for example, ul-FullPowerTransmission) included in a PUSCH configuration (for example, PUSCH-Config), full power, full power mode 1, or full power mode 2 ({fullpower, fullpowerMode1, fullpowerMode2}) may be configured for the plurality of PUSCHs.

### {Option 2A-2}

For single-DCI based simultaneous multi-panel UL transmission (for example, a plurality of PUSCHs), the codebook configuration (for example, codebook subset configuration)/UL full power transmission (for example, ul-FullPowerTransmission) may be configured individually/separately. In other words, it may be supported that, for a plurality of PUSCHs related to respective TRPs/panels, the codebook configuration (for example, codebook subset configuration)/UL full power transmission (for example, ul-FullPowerTransmission) is configured differently.

For example, a first higher layer parameter corresponding to the codebook configuration/UL full power transmission may be configured for PUSCH #1 related to a first TRP/panel and a second higher layer parameter corresponding to the codebook configuration/UL full power transmission may be configured for PUSCH #2 related to a second TRP/panel (see FIG. 5B). The first higher layer parameter may be a higher layer parameter corresponding to codebook configuration/UL full power transmission supported in an existing system (for example, Rel. 16 or earlier versions) and the second higher layer parameter may be a new higher layer parameter.

With a codebook subset (for example, codebookSubset) included in a PUSCH configuration (for example, PUSCH-Config), fully coherent, partial coherent, or non-coherent ({fullyAndPartialAndNonCoherent, partialAndNonCoherent, nonCoherent}) may be configured separately for the plurality of PUSCHs. Alternatively, with a full power transmission mode (for example, ul-FullPowerTransmission) included in a PUSCH configuration (for example, PUSCH-Config), full power, full power mode 1, or full power mode 2 ({fullpower, fullpowerMode1, fullpowerMode2}) may be configured separately for the plurality of PUSCHs.

Note that, although a case is shown in FIG. 5B where the first higher layer parameter and the second higher layer parameter are included in the same PUSCH configuration (for example, PUSCH-Config), they may be included in different PUSCH configurations.

Even when single-DCI based simultaneous multi-panel UL transmission is configured, the UE may be applied with different configurations on the basis of whether to apply simultaneous multi-panel UL transmission. For example, in a case of not performing simultaneous multi-panel UL transmission, a specific higher layer parameter may be applied to a PUSCH transmission, and in a case of performing simultaneous multi-panel UL transmission, a plurality of higher layer parameters may be applied to a plurality of PUSCH transmissions.

### <<Multi-DCI Basis>>

In a case where multi-DCI based simultaneous multi-panel UL transmission (for example, SiMPUL) is configured, for codebook configuration (for example, codebook subset configuration)/UL full power transmission (for example, ul-FullPowerTransmission), at least one of Option 2B-1 and Option 2B-2 below may be applied.

Whether to apply multi-DCI based simultaneous multi-panel UL transmission (for example, SiMPUL) may be configured for a UE by a network (for example, base station). For example, the base station configures, for the UE, multi-DCI based simultaneous multi-panel UL transmission by using a higher layer parameter (for example, RRC parameter). The UE may judge "multi-DCI based" when a CORESET pool index is configured.

### {Option 2B-1}

For multi-DCI based simultaneous multi-panel UL transmission (for example, a plurality of PUSCHs), codebook configuration (for example, codebook subset configuration)/UL full power transmission (for example, ul-FullPowerTransmission) may be configured similarly to an existing system (for example, Rel. 16 or earlier versions). For example, for multi-DCI based simultaneous multi-panel UL transmission (for example, a plurality of PUSCHs), the codebook configuration (for example, codebook subset configuration)/UL full power transmission (for example, ul-FullPowerTransmission) may be configured in common by higher layer signaling (see FIG. 5A).

The UE may apply a higher layer parameter related to the codebook configuration in common to a plurality of PUSCHs, regardless of a TRP/panel to which each PUSCH is related to. For example, by higher layer signaling, a codebook subset configuration (for example, codebookSubset) for a certain DCI format (for example, DCI format 0_1/0_2) may be applied in common to the plurality of PUSCHs. More specifically, with a codebook subset (for example, codebookSubset) included in a PUSCH configuration (for example, PUSCH-Config), fully coherent, partial coherent, or non-coherent ({fullyAndPartialAndNonCoherent, partialAndNonCoherent, nonCoherent}) may be configured for the plurality of PUSCHs.

The UE may apply a higher layer parameter related to the UL full power transmission in common to a plurality of PUSCHs, regardless of a TRP/panel to which each PUSCH is related to. For example, by higher layer signaling, a full power transmission mode (for example, ul-FullPowerTransmission) may be applied in common to the plurality of PUSCHs. More specifically, with a full power transmission mode (for example, ul-FullPowerTransmission) included in a PUSCH configuration (for example, PUSCH-Config), full power, full power mode 1, or full power mode 2 ({fullpower, fullpowerMode1, fullpowerMode2}) may be configured for the plurality of PUSCHs.

### {Option 2B-2}

For multi-DCI based simultaneous multi-panel UL transmission (for example, a plurality of PUSCHs), the codebook configuration (for example, codebook subset configuration)/UL full power transmission (for example, ul-FullPowerTransmission) may be configured individually/separately. In other words, it may be supported that, for a plurality of PUSCHs related to respective TRPs/panels, the codebook configuration (for example, codebook subset configuration)/UL full power transmission (for example, ul-FullPowerTransmission) is configured differently.

For example, a first higher layer parameter corresponding to the codebook configuration/UL full power transmission may be configured for PUSCH #1 related to a first TRP/panel and a second higher layer parameter corresponding to the codebook configuration/UL full power transmission may be configured for PUSCH #2 related to a second TRP/panel (see FIG. 5B). The first higher layer parameter may be a higher layer parameter corresponding to codebook configuration/UL full power transmission supported in an existing system (for example, Rel. 16 or earlier versions) and the second higher layer parameter may be a new higher layer parameter.

With a codebook subset (for example, codebookSubset) included in a PUSCH configuration (for example, PUSCH-Config), fully coherent, partial coherent, or non-coherent ({fullyAndPartialAndNonCoherent, partialAndNonCoherent, nonCoherent}) may be configured separately for the plurality of PUSCHs. Alternatively, with a full power transmission mode (for example, ul-FullPowerTransmission) included in a PUSCH configuration (for example, PUSCH-Config), full power, full power mode 1, or full power mode 2 ({fullpower, fullpowerMode1, fullpowerMode2}) may be configured separately for the plurality of PUSCHs.

Note that, although a case is shown in FIG. 5B where the first higher layer parameter and the second higher layer parameter are included in the same PUSCH configuration (for example, PUSCH-Config), they may be included in different PUSCH configurations.

Alternatively, by a higher layer parameter, a plurality of candidates (or entries) for the codebook configuration/plurality of candidates (or entries) for the UL full power transmission or a set including the codebook configuration and the UL full power transmission may be configured. In this case, DCI used for scheduling of each PUSCH may indicate a codebook subset/UL full power transmission to be applied to each PUSCH.

For single-DCI based simultaneous multi-panel UL transmission/multi-DCI based simultaneous multi-panel UL transmission, a UE capability with respect to the codebook subset configuration/UL full power transmission may be introduced/supported per panel.

### <Third Embodiment>

A third embodiment describes configuration of a rank (for example, maximum rank) in simultaneous multi-panel UL transmission (for example, SiMPUL). In the following, although description is given taking PUSCH transmission as UL transmission as an example, the description may be applied to another UL channel/UL signal.

### <<Multi-DCI Basis>>

In a case where multi-DCI based simultaneous multi-panel UL transmission (for example, SiMPUL) is configured, for maximum rank configuration (for example, maxrank configuration), at least one of Option 3-1 and Option 3-4 below may be applied.

Whether to apply multi-DCI based simultaneous multi-panel UL transmission (for example, SiMPUL) may be configured for a UE by a network (for example, base station). For example, the base station configures, for the UE, multi-DCI based simultaneous multi-panel UL transmission by using a higher layer parameter (for example, RRC parameter). The UE may judge "multi-DCI based" when a CORESET pool index is configured. Maximum rank configuration (for example, maxrank configuration) may be configured by a higher layer parameter.

### {Option 3-1}

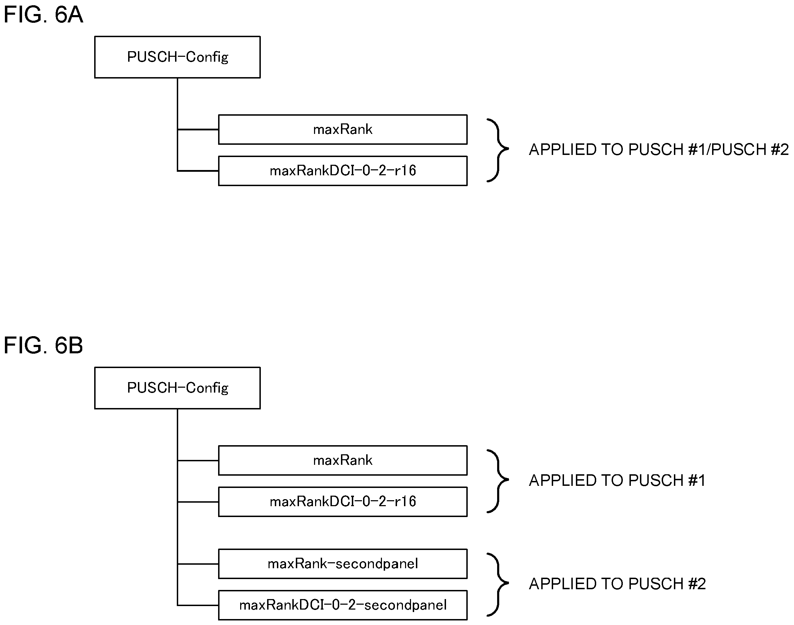

For multi-DCI based simultaneous multi-panel UL transmission (for example, a plurality of PUSCHs), a maximum rank (for example, maxRank/maxRankDCI-0-2-r16) may be configured similarly to an existing system (for example, Rel. 16 or earlier versions). For example, for a plurality of PUSCHs related to respective TRPs/panels, a maximum rank (for example, maxRank/maxRankDCI-0-2-r16) may be configured in common by higher layer signaling (see FIG. 6A).

In a case where a rank is configured for two PUSCHs scheduled by two pieces of DCI, the UE may control a UE operation (for example, how to perform configuration of the ranks) on the basis of a scheduling case. As the scheduling case, Scheduling Case #3-1/#3-2 below may be included.
- Scheduling Case #3-1: A case where two scheduled PUSCHs (for example, PUSCH #1 and PUSCH #2) overlap with each other in the time domain
- Scheduling Case #3-2: A case where a scheduled PUSCH (for example, PUSCH #1) does not overlap with another PUSCH (for example, PUSCH #2) in the time domain

Note that PUSCH #1 and PUSCH #2 correspond to respective PUSCHs corresponding to different TRPs/panels.

Depending on whether the two PUSCHs overlap with each other in the time domain, the UE may judge relation between the configured rank (for example, maximum rank) and each rank to be applied to a respective one of the PUSCHs. For example, depending on Scheduling Case #3-1/#3-2, the UE may apply at least one of Option 3-1-1 and Option 3-1-2 below.

### {{Option 3-1-1}}

The UE may understand that the maximum rank configured by the higher layer parameter is the maximum total rank for the plurality of PUSCHs (for example, temporally different PUSCHs between TRPs/panels).

In other words, this may mean that, in a case of Scheduling Case #3-2, the total rank for one scheduled PUSCH is not to exceed a value (maximum rank) configured by RRC. This may mean that, in a case of Scheduling Case #3-1, the total rank for the two PUSCHs is not to exceed a value (maximum rank) configured by RRC.

### {{Option 3-1-2}}

The UE may understand that the maximum rank configured by the higher layer parameter is the maximum total rank for each PUSCH (for example, each PUSCH for a respective one of TRPs/panels).

In this case, only a certain value (for example, 1 or 2) may be a candidate for the rank. For example, this may mean that, in a case of Scheduling Case #3-1, each PUSCH is not to exceed a value (maximum rank) configured by RRC. This may mean that, in a case of Scheduling Case #3-2, one PUSCH is not to exceed a value (maximum rank) configured by RRC or is not to exceed a value twice of the configured value.

### {Option 3-2}

For multi-DCI based simultaneous multi-panel UL transmission (for example, a plurality of PUSCHs), maximum ranks (for example, maxRank/maxRankDCI-0-2-r16) may be configured individually/separately. In other words, it may be supported that, for a plurality of PUSCHs related to respective TRPs/panels, maximum ranks (for example, maxRank/maxRankDCI-0-2-r16) are configured separately by higher layer signaling.

For example, a first higher layer parameter corresponding to a maximum rank may be configured for PUSCH #1 related to a first TRP/panel and a second higher layer parameter corresponding to a maximum rank may be configured for PUSCH #2 related to a second TRP/panel. The first higher layer parameter may be a higher layer parameter (for example, maxRank/maxRankDCI-0-2-r16) corresponding to a maximum rank supported in an existing system (for example, Rel. 16 or earlier versions) and the second higher layer parameter may be a new higher layer parameter (for example, maxRank-secondpanel/maxRankDCI-0-2-secondpanel) (see FIG. 6B).

The UE may judge a rank to be applied to each PUSCH on the basis of the maximum rank configured for each PUSCH. For example, the UE may apply at least one of Option 3-2-1 and Option 3-2-2 below.

### {{Option 3-2-1}}

The UE may assume that the sum of two values (for example, the maximum number of ranks configured for PUSCH #1 and the maximum number of ranks configured for PUSCH #2) configured for the respective PUSCHs does not exceed a UE capability/certain value. The certain value may be four, for example.

For the respective PUSCHs, the base station is sufficient to perform control to configure maximum ranks such that the sum of the values does not exceed the certain value. In this case, the base station may determine the maximum ranks corresponding to the respective PUSCHs by taking account of the UE capability related to the maximum number of ranks reported by the UE.

### {{Option 3-2-2}}

It may be allowed/supported that the sum of two values (for example, the maximum number of ranks configured for PUSCH #1 and the maximum number of ranks configured for PUSCH #2) configured for the respective PUSCHs is configured exceeding a UE capability/certain value. In this case, control may be performed for the sum of the ranks for the respective PUSCHs actually scheduled not to exceed the UE capability/certain value.

For example, the base station/UE may configure a maximum rank of four for PUSCH #1 (for example, PUSCH #1 corresponding to panel #1) and may configure a maximum rank of two for PUSCH #2 (PUSCH #2 corresponding to panel #2). In a case where PUSCH #1 and PUSCH #2 overlap with each other in the time domain, the base station/UE may perform control for the actual number of ranks (the total number of ranks of PUSCH #1 and PUSCH #2) not to exceed four.

### {Option 3-3}

For multi-DCI based simultaneous multi-panel UL transmission (for example, a plurality of PUSCHs), allowed rank distribution may be configured directly for two panels (or respective PUSCHs corresponding to the panels).

For example, for two panels (or respective PUSCHs corresponding to the panels), ranks to be configured for the respective panels may be selected from among certain combinations defined in advance. For the certain combinations, for example, at least one of (1, 1), (2, 2), (1, 2), (2, 1), (1, 0), (2, 0), (3, 0), and (4, 0) may be supported. Note that "0" may mean that the panel/PUSCH corresponding to "0" is not scheduled. For example, in a case that (2, 0) is configured, this may mean that PUSCH #2 corresponding to the second panel is not scheduled/configured.

### {Option 3-4}

For multi-DCI based simultaneous multi-panel UL transmission (for example, a plurality of PUSCHs), configuration may be made separately per scheduling case. The scheduling case may be Scheduling Case #3-1/#3-2 described above.

For example, a first higher layer parameter corresponding to a maximum rank may be configured for Scheduling Case #3-2 and a second higher layer parameter corresponding to a maximum rank may be configured for Scheduling Case #3-1. For example, the first higher layer parameter may be a higher layer parameter (for example, maxRank/maxRankDCI-0-2-r16) corresponding to a maximum rank supported in an existing system (for example, Rel. 16 or earlier versions). The second higher layer parameter may be a new higher layer parameter (for example, maxRank-secondpanel/maxRankDCI-0-2-secondpanel) .

As the new higher layer parameter to be configured for Scheduling Case #3-1, at least one of Option 3-4-1/Option 3-4-2 below may be applied.

### {{Option 3-4-1}}

One parameter (for example, maxrank-twopanels) to be applied to two panels may be configured. Such one parameter may be configured with a certain range (for example, 1 or 2).

### {{Option 3-4-2}}

Rank distribution for two panels may be configured. For the rank distribution, for example, (1, 1) and (2, 2) may be supported. Of course, other rank distribution may be supported.

### <<Single-DCI Basis>>

In a case where single-DCI based simultaneous multi-panel UL transmission (for example, SiMPUL) is configured, for maximum rank configuration (for example, maxrank configuration), at least one of Option 3-1 and Option 3-4 described above may be applied/reused.

Whether to apply single-DCI based simultaneous multi-panel UL transmission (for example, SiMPUL) may be configured for a UE by a network (for example, base station). For example, the base station configures, for the UE, single-DCI based simultaneous multi-panel UL transmission by using a higher layer parameter (for example, RRC parameter). The UE may judge "single-DCI based" when no CORESET pool index is configured (or when only one value is configured as a CORESET pool index). Maximum rank configuration (for example, maxrank configuration) may be configured by a higher layer parameter.

In a case where at least one of Option 3-1 and Option 3-4 described above is applied/reused for single-DCI based simultaneous multi-panel UL transmission, "PUSCH" may be replaced with "CW". In single-DCI based simultaneous multi-panel UL transmission, only a specific scheduling case (for example, Scheduling Case #3-1) may be supported.

For single-DCI based simultaneous multi-panel UL transmission/multi-DCI based simultaneous multi-panel UL transmission, a UE capability with respect to the maximum rank may be introduced/supported per panel.

### <Variations>

In the embodiment described above, when a UE capability corresponding to a codebook/full power/rank is defined per panel (or UE capability set), a higher layer parameter may be configured for each panel.

In the embodiment described above, when a UE capability corresponding to a codebook/full power/rank is defined in a UE/BWP/CC/band unit, instead of a panel unit, a higher layer parameter may be configured for each panel.

In the embodiment described above, although description is made taking a UE with two panels semi-statically active as an example, the present disclosure is not limited to this. Two panels for simultaneous multi-panel UL transmission (SiMPUL) may be selected from two or more (or more than two) panels, or the two panels may be selected dynamically. In this case, respective new higher layer parameters associated with the panels may be present/supported, and based on a panel scheduled/selected, the corresponding higher layer parameter may be applied.

Both of a UE capability related to a codebook/full power/rank per panel and a UE capability related to a codebook/full power/rank per UE/BWP/CC/band may be defined. In this case, based on the both UE capabilities, configuration of a higher layer parameter (a value to be configured) may be restricted.

### <Fourth Embodiment>

A fourth embodiment describes transmission timing/scheduling order between a plurality of PUSCHs/pieces of DCI in simultaneous multi-panel UL transmission (for example, SiMPUL). In the following, although description is given taking PUSCH transmission as UL transmission as an example, the description may be applied to another UL channel/UL signal.

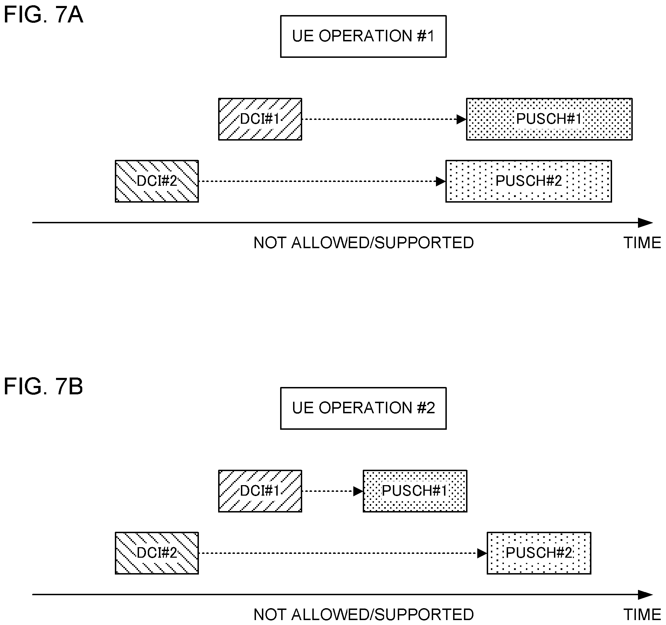

In an existing system (for example, Rel. 16/17 or earlier versions), regarding transmission timing/scheduling order for a plurality of PUSCHs, a certain rule is defined. For example, with respect to any HARQ process ID(s) in a certain scheduled cell (given scheduled cell), a UE does not assume/expect transmission of a PUSCH overlapping with another PUSCH in the time domain (UE operation #1) (see FIG. 7A).

For example, as shown in FIG. 7A, in a certain cell, it is not allowed that PUSCH #1 scheduled by DCI #1 and PUSCH #2 scheduled by DCI #2 overlap with each other in the time domain.

In a case where initiation of a first PUSCH transmission that starts at symbol j is scheduled by a PDCCH that ends at symbol i, the UE does not assume/expect that transmission of a PUSCH that starts earlier than an end of the first PUSCH is to be scheduled by a PDCCH that ends later than symbol i (UE operation #2) (see FIG. 7B).

For example, as shown in FIG. 7B, in a case where initiation of a PUSCH #2 transmission that starts at symbol j is scheduled by PDCCH #2 (DCI #2) that ends at symbol i, the UE is not allowed that transmission of PUSCH #1 that starts earlier than an end of PUSCH #2 is to be scheduled by PDCCH #1 (DCI #1) that ends later than symbol i.

Note that, in UE operation #2, a certain case may be excluded. The certain case may be a case that a higher layer parameter (for example, PDCCH-Config) including two different CORESET pool index values is configured in a control resource set (ControlResourceSet) of an active BWP in a serving cell and that a plurality of PDCCHs scheduling two PUSCHs not overlapping with each other in the time domain are associated with different control resource sets (ControlResourceSets) with different CORESET pool index values, with respect to any two HARQ process IDs in a certain scheduled cell.

### <<Multi-DCI Basis>>

### {UE Operation #1}

In a case where multi-DCI based simultaneous multi-panel UL transmission (for example, SiMPUL) is configured, UE operation #1 may be applied to PUSCHs scheduled with an identical TRP/panel. In this case, with respect to PUSCHs scheduled with a plurality of (for example, two) TRPs/panels, there may be no restriction for UE operation #1.

In this case, with respect to any HARQ process ID(s) in a certain scheduled cell (given scheduled cell), the UE does not assume/expect transmission of a PUSCH overlapping, in the time domain, with another PUSCH associated with the same panel ID (for example, same new-panel-ID) .

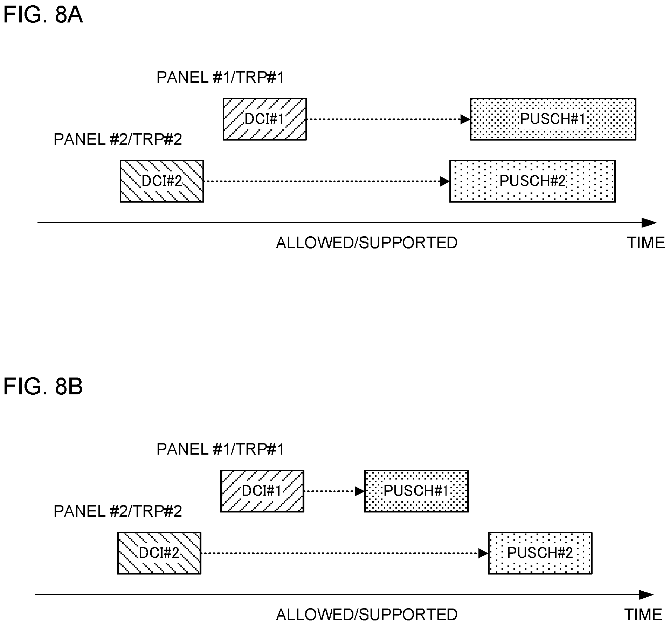

For example, in a certain cell, it may be allowed/supported that PUSCH #1 scheduled by PDCCH #1 (or DCI #1) corresponding to a first TRP/panel and PUSCH #2 scheduled by PDCCH #2 (or DCI #2) corresponding to a second TRP/panel overlap with each other in the time domain (see FIG. 8A).

### {UE Operation #2}

In a case where multi-DCI based simultaneous multi-panel UL transmission (for example, SiMPUL) is configured, UE operation #2 may be applied to PUSCHs scheduled with an identical TRP/panel. In this case, with respect to PUSCHs scheduled with a plurality of (for example, two) TRPs/panels, there may be no restriction for UE operation #2.

In this case, as a certain case to which UE operation #2 is not applied, the following may be defined. The certain case may be a case that a higher layer parameter (for example, PDCCH-Config) including two different CORESET pool index values is configured in a control resource set (ControlResourceSet) of an active BWP in a serving cell and that a plurality of PDCCHs scheduling two PUSCHs not overlapping with each other "or two PUSCHs overlapping with each other" in the time domain are associated with different control resource sets (ControlResourceSets) with different CORESET pool index values, with respect to any two HARQ process IDs in a certain scheduled cell. "Overlapping" may include at least one of partial overlap (for example, partial-overlapping) and full overlap (for example, full-overlapping). Alternatively, in a certain case, a case of not overlapping in the time domain may be deleted.

For example, a case is assumed that PUSCH #1 is scheduled with PDCCH #1 (or DCI #1) corresponding to a first TRP/panel and PUSCH #2 is scheduled with PDCCH #2 (or DCI #2) corresponding to a second TRP/panel. In this case, in a case where initiation of a PUSCH #2 transmission that starts at symbol j is scheduled by PDCCH #2 (DCI #2) that ends at symbol i, the UE may be allowed/supported that transmission of PUSCH #1 that starts earlier than an end of PUSCH #2 is to be scheduled by PDCCH #1 (DCI #1) that ends later than symbol i (see FIG. 8B).

Note that, in multi-DCI based simultaneous multi-panel UL transmission, in a case where association between a plurality of pieces of DCI is configured (for example, a case where a pair index is defined/configured), UE operation #1/UE operation #2 may be applied to PUSCHs scheduled by PDCCHs (or pieces of DCI) with different pair indices. In contrast, for PUSCHs scheduled by PDCCHs (or pieces of DCI) with an identical pair index, no restriction for UE operation #1/UE operation #2 may be applied.

Note that a UE capability (for example, UE capability related to out-of-order PUSCH enhancement) related to restriction for UE operation #1/#2 may be introduced/supported.

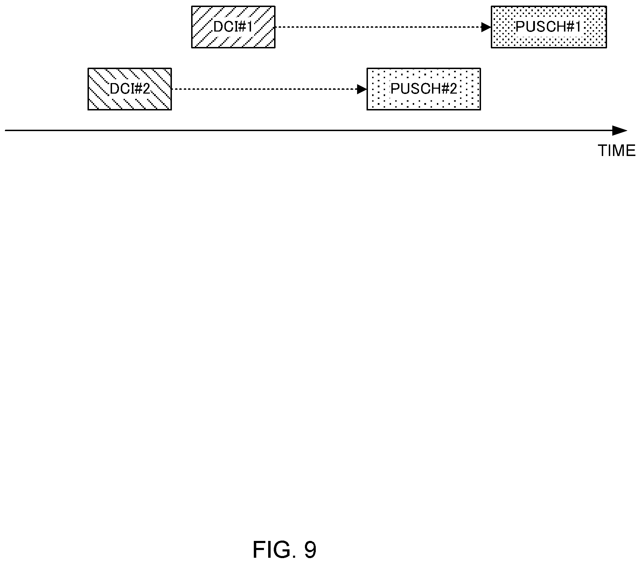

When the UE does not have the UE capability related to the restriction for UE operation #1/#2 (or the UE does not support out-of-order), scheduling of only a plurality of PUSCHs that meet that two PUSCHs does not overlap with each other in the time domain may be allowed/supported. Furthermore, in this case, the scheduling order for the PUSCHs (for example, an order of DCI for scheduling a certain PUSCH and another PUSCH or the like) may be controlled to satisfy UE operation #2 (see FIG. 9).

### <Application of Transmission Scheme>

With respect to the first embodiment to fourth embodiment, the application to a part or all of transmission scheme #1 to transmission scheme #3 shown in FIGS. 3A to 3C may be supported. Which of transmission scheme #1 to transmission scheme #3 to be applied may be defined in a specification or may be configured/indicated for a UE by a base station.

Which of single-DCI based simultaneous multi-panel UL transmission (SiMPUL) or multi-DCI based simultaneous multi-panel UL transmission to be applied, in the first embodiment to fourth embodiment may be defined in a specification or may be configured/indicated for a UE by a base station.

Transmission scheme #1 to transmission scheme #3 and single-DCI based SiMPUL/multi-DCI based SiMPUL may be combined as appropriate for the application.

For example, transmission scheme #1 (or transmission scheme #1 and transmission scheme #2) may be applied/configured/supported for single-DCI based SiMPUL. In this case, one MIMO codebook may be applied to two PUSCHs/panels.

Alternatively, transmission scheme #3 (or transmission scheme #3 and transmission scheme #2) may be applied/configured/supported for multi-DCI based SiMPUL. In this case, one MIMO codebook may be applied to each of two PUSCHs/panels.

### <UE Capability Information>

In the first embodiment to fourth embodiment, the following UE capabilities may be configured. Note that the following UE capabilities may each be interpreted as a parameter (for example, higher layer parameter) configured for a UE by a network (for example, base station).

UE capability information related to whether to support single-DCI based simultaneous multi-panel UL transmission (for example, SiMPUL) may be defined.

UE capability information related to whether to support multi-DCI based simultaneous multi-panel UL transmission (for example, SiMPUL) may be defined.

UE capability information related to whether to support full overlap (full overlapping)/partial overlap (partial overlapping)/non overlap (non overlapping) in time/frequency resources for a plurality of PUSCHs may be defined.

UE capability information related to whether to support out-of-order of a plurality of PUSCHs may be defined.

The first embodiment to fourth embodiment may be applied to a UE that supports/reports at least one of the UE capabilities described above. Alternatively, the first embodiment to fourth embodiment may be applied to a UE configured by a network.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

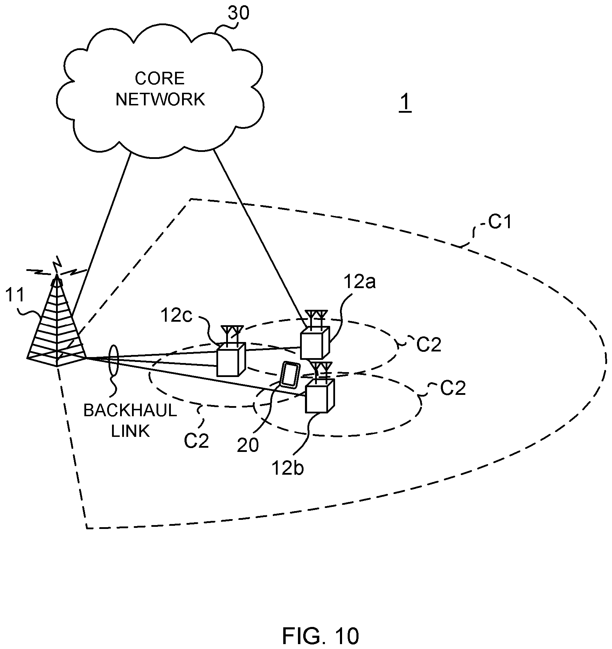

FIG. 10 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage and base stations 12 (12a to 12c) that form small cells C2, which are placed within the macro cell C1 and which are each narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal that supports at least one of communication schemes such as LTE, LTE-A, and 5G.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in UL and DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information, and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling a PDSCH may be referred to as "DL assignment," "DL DCI," or the like, and DCI for scheduling a PUSCH may be referred to as "UL grant," "UL DCI," or the like. Note that the PDSCH may be interpreted as "DL data," and the PUSCH may be interpreted as "UL data."

For detection of a PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space on the basis of search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of a PRACH, a random access preamble for establishment of connection with a cell may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for the PBCH) may be referred to as an SS/PBCH block, an SS Block (SSB), or the like. Note that an SS, an SSB, and so on may be referred to as a "reference signal."

In the radio communication system 1, a reference signal for measurement (Sounding Reference Signal (SRS)), a demodulation reference signal (DMRS), and so on may be communicated as an uplink reference signal (UL-RS). Note that DMRS may be referred to as a "user terminal specific reference signal (UE-specific Reference Signal)."

### (Base Station)

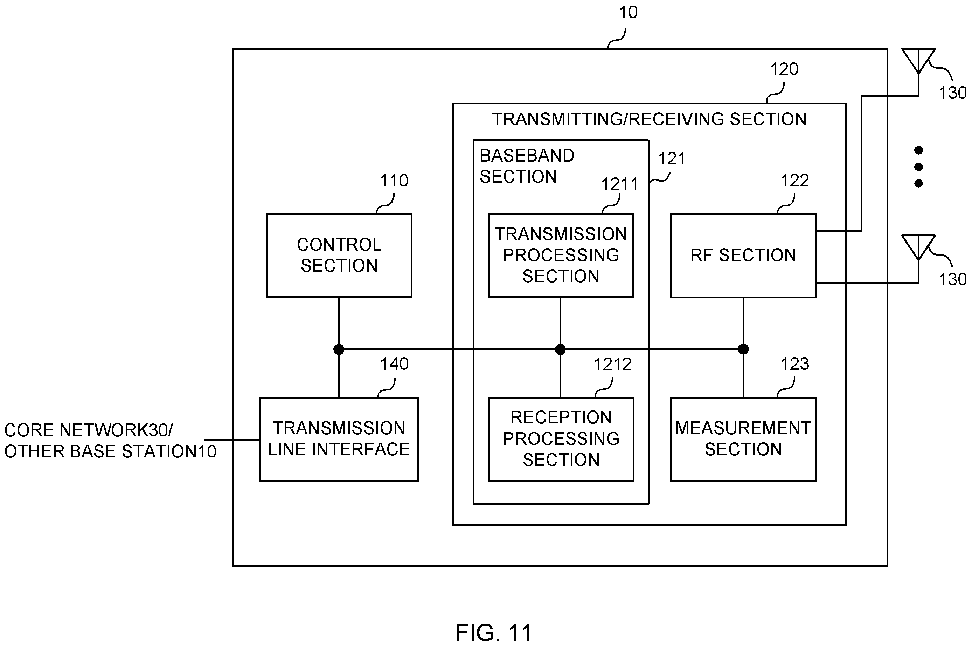

FIG. 11 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211 and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 may transmit first downlink control information scheduling a first UL channel related to at least one of a first panel and a first transmission/reception point (TRP) and second downlink control information scheduling a second UL channel related to at least one of a second panel and a second TRP. The control section 110 may control reception of the first UL channel and the second UL channel. The first UL channel and the second UL channel are transmitted at least partially in the same time domain.

When UL transmission using a plurality of panels at least including a first panel and a second panel is supported, the transmitting/receiving section 120 may transmit, for the first UL channel related to at least one of the first panel and the first transmission/reception point (TRP) and the second UL channel related to at least one of the second panel and the second TRP, a first parameter commonly configured or second parameters separately configured. The control section 110 may control scheduling of the first UL channel and the second UL channel by using a single piece of downlink control information or a plurality of pieces of downlink control information. The transmitting/receiving section 120 may receive the first UL channel and the second UL channel applied with the first parameter or second parameters.

The transmitting/receiving section 120 may transmit first downlink control information scheduling a first UL channel and second downlink control information scheduling a second UL channel. Based on whether respective panels or transmission/reception points (TRPs) corresponding to the first downlink control information and second downlink control information are the same as each other, the control section 110 may control at least one of application of a first UE operation related to first UL channel transmission and second UL channel transmission in the time domain and application of a second UE operation related to a transmission order for pieces of downlink control information and UL channels.

### (User Terminal)

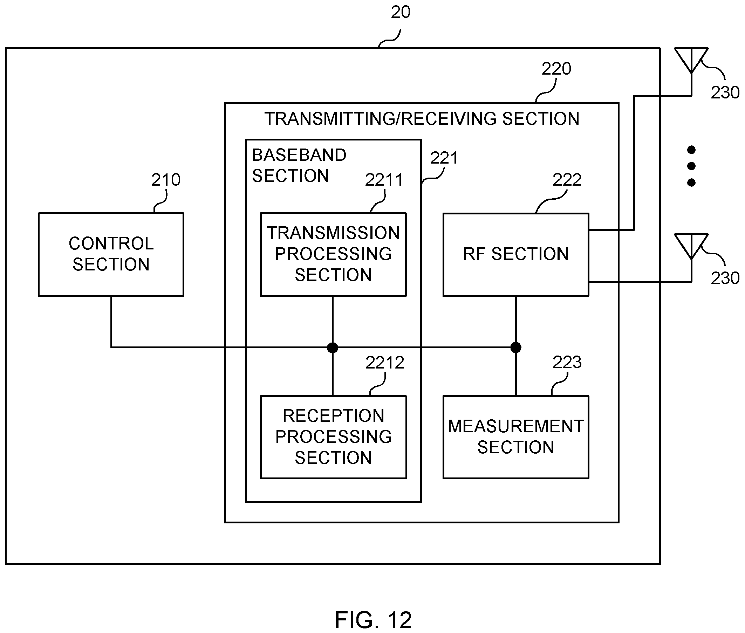

FIG. 12 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211 and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and the like, for example, on data, control information, and the like acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that whether to apply DFT processing may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and the like, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and the like, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and the like, based on the received signal. The measurement section 223 may measure a received power (for example, RSRP), a received quality (for example, RSRQ, SINR, SNR), a signal strength (for example, RSSI), channel information (for example, CSI), and the like. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive first downlink control information scheduling a first UL channel related to at least one of a first panel and a first transmission/reception point (TRP) and second downlink control information scheduling a second UL channel related to at least one of a second panel and a second TRP. The control section 210 may control transmission of the first UL channel and the second UL channel. The first UL channel and the second UL channel are transmitted at least partially in the same time domain.

The first UL channel and the second UL channel may correspond to the same number of codewords (for example, CW = 1). Alternatively, the first UL channel and the second UL channel may be transmitted at least partially in the same frequency domain. Alternatively, the first UL channel and the second UL channel may be transmitted in respective different frequency domains configured within a certain gap range.

When UL transmission using a plurality of panels at least including a first panel and a second panel is supported, the transmitting/receiving section 220 may receive, for the first UL channel related to at least one of the first panel and the first transmission/reception point (TRP) and the second UL channel related to at least one of the second panel and the second TRP, a first parameter commonly configured or second parameters separately configured. The control section 210 may apply the first parameter or second parameters to transmission of the first UL channel and second UL channel scheduled by using a single piece of downlink control information or a plurality of pieces of downlink control information.

The first parameter or second parameters may be a parameter(s) related to at least one of codebook subset configuration and UL full power transmission. Alternatively, the first parameter or second parameters may be a parameter(s) related to maximum rank configuration. Based on whether the first UL channel and second UL channel overlap with each other in the same time domain, the control section 210 may judge relation between the maximum rank configuration and a rank to be applied to each of the first UL channel and second UL channel.

The transmitting/receiving section 220 may receive first downlink control information scheduling a first UL channel and second downlink control information scheduling a second UL channel. Based on whether respective panels or transmission/reception points (TRPs) corresponding to the first downlink control information and second downlink control information are the same as each other, the control section 210 may control at least one of application of a first UE operation related to first UL channel transmission and second UL channel transmission in the time domain and application of a second UE operation related to a transmission order for pieces of downlink control information and UL channels.

When the respective panels or transmission/reception points (TRPs) corresponding to the first downlink control information and second downlink control information are the same as each other, the control section 210 may apply at least one of the first UE operation (restriction) and the second UE operation (restriction). Alternatively, when the respective panels or transmission/reception points (TRPs) corresponding to the first downlink control information and second downlink control information are different from each other, the control section 210 may not need to apply at least one of the first UE operation (restriction) and the second UE operation (restriction). The control section 210, when not having a certain UE capability, may apply the first UE operation (restriction) and the second UE operation (restriction).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

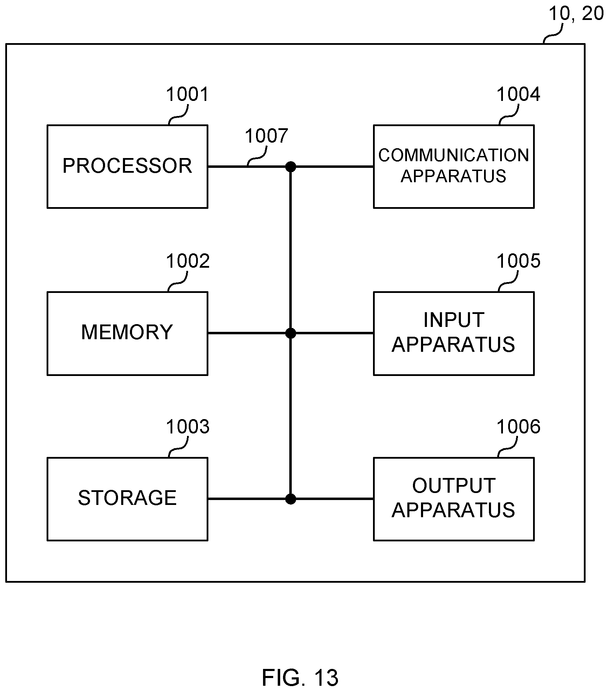

For example, a base station, a user terminal, and so on according to one embodiment of the present disclosure may function as a computer that executes the processes of the radio communication method of the present disclosure. FIG. 13 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) may be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. Since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of certain information (for example, notification of "being X") does not necessarily have to be notified explicitly, and can be notified implicitly (by, for example, not notifying this certain information or notifying another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

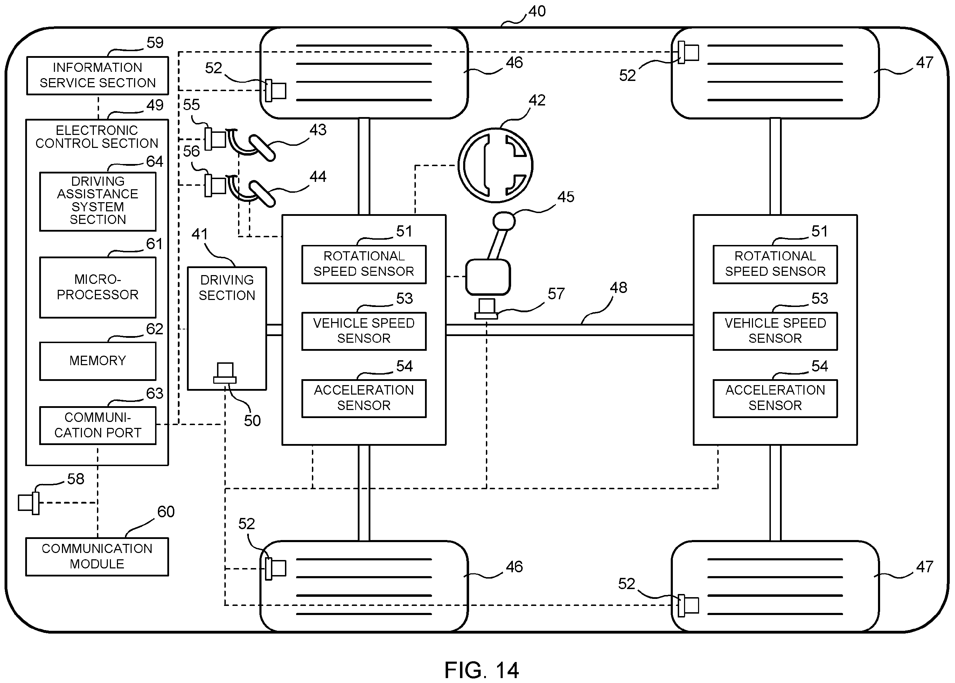

FIG. 14 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of operations. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some operation.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives first downlink control information scheduling a first UL channel related to at least one of a first panel and a first transmission/reception point (TRP) and second downlink control information scheduling a second UL channel related to at least one of a second panel and a second TRP; and
a control section that controls transmission of the first UL channel and the second UL channel, wherein
the first UL channel and the second UL channel are transmitted at least partially in the same time domain.

2. The terminal according to claim 1, wherein
the first UL channel and the second UL channel correspond to the same number of codewords.

3. The terminal according to claim 1 or 2, wherein
the first UL channel and the second UL channel are transmitted at least partially the same frequency domain.

4. The terminal according to claim 1 or 2, wherein
the first UL channel and the second UL channel are transmitted in respective different frequency domains configured within a certain gap range.

5. A radio communication method for a terminal, the radio communication method comprising:
receiving first downlink control information scheduling a first UL channel related to at least one of a first panel and a first transmission/reception point (TRP) and second downlink control information scheduling a second UL channel related to at least one of a second panel and a second TRP; and
controlling transmission of the first UL channel and the second UL channel, wherein
the first UL channel and the second UL channel are transmitted at least partially in the same time domain.

6. A base station comprising:
a transmitting section that transmits first downlink control information scheduling a first UL channel related to at least one of a first panel and a first transmission/reception point (TRP) and second downlink control information scheduling a second UL channel related to at least one of a second panel and a second TRP; and
a control section that controls reception of the first UL channel and the second UL channel, wherein
the first UL channel and the second UL channel are transmitted at least partially in the same time domain.
